# EUROPÄISCHE PATENTSCHRIFT

(11) **EP 3 932 635 B1**
(45) Veröffentlichungstag und Bekanntmachung des Hinweises auf die Patenterteilung: **30.07.2025**
(21) Anmeldenummer: 20183204.5
(22) Anmeldetag: 30.06.2020
(51) Int. Cl.: B27B 17/00

(54) **ARBEITSGERÄT**
WORK DEVICE
APPAREIL DE TRAVAIL

(43) Veröffentlichungstag der Anmeldung: 05.01.2022
(73) Patentinhaber: Andreas Stihl AG & Co. KG, 71336 Waiblingen (DE)
(72) Erfinder: POSNER, Benedikt Dr., 70567 Stuttgart (DE)
(74) Vertreter: Karzel, Philipp

(56) Entgegenhaltungen:
- DE-A1- 102007 031 337
- DE-C1- 4 142 751
- GB-A- 2 481 037
- JP-A- 2006 110 767

## Beschreibung

Die Erfindung betrifft ein Arbeitsgerät nach dem Oberbegriff des Anspruchs 1.

Aus der GB 2481037 A ist ein Arbeitsgerät mit einem Stehbolzen bekannt, an dem als Werkzeug eine Führungsschiene mit einer Sägekette befestigt ist. Zwischen der Führungsschiene und dem Stehbolzen ist eine Hülse aus Silikon angeordnet. Der Stehbolzen ist in einem Gehäuseteil des Arbeitsgeräts befestigt. Im Betrieb des Arbeitsgeräts werden Kräfte von der Führungsschiene auf den Stehbolzen übertragen. Diese Kräfte können die Verbindung zwischen dem Stehbolzen und dem Gehäuseteil schädigen und im Extremfall sogar dafür sorgen, dass der Stehbolzen sich aus dem Gehäuseteil löst. Zur Abfederung dieser Kräfte ist in der GB 2481037 A die Hülse aus Silikon vorgesehen. Die Hülse verschleißt im Betrieb schnell, wobei die Dämpfungswirkung der Hülse geschwächt oder vollkommen zunichte gemacht wird. Ein weiterer Betrieb des Arbeitsgeräts kann dann schnell zu einer Destabilisierung der Verbindung zwischen Stehbolzen und Gehäuseteil führen.

Aus der JP 2006-110767 A ist eine Motorkettensäge mit einer Montagehilfe für die Montage der Führungsschiene bekannt. Hierfür weist die Führungsschiene einen Führungszapfen mit einem Riegelvorsprung aus Hartgummi auf, der eine Führung am Grundkörper der Motorkettensäge hintergreift und die Führungsschiene während der Montage an dem Grundkörper hält.

Die DE 41 42 751 C1 zeigt einen Federring, der die Führungsschiene einer Motorsäge während der Montage auf dem Stehbolzen hält.

Aus der DE 10 2007 031 337 A1 ist ein elastisches Klemmelement zur Anordnung zwischen einem Stehbolzen und einer Führungsschiene einer Motorkettensäge bekannt.

Der Erfindung liegt die Aufgabe zugrunde, ein gattungsgemäßes Arbeitsgerät derart weiterzubilden, dass ein verschleißarmer und sicherer Betrieb des Arbeitsgeräts möglich ist.

Diese Aufgabe wird durch ein Arbeitsgerät mit den Merkmalen des Anspruchs 1 gelöst.

Erfindungsgemäß ist vorgesehen, dass das Übertragungselement als erstes Element ausgebildet ist, und dass das erste Element zumindest teilweise aus einem ersten Material besteht, das einen Elastizitätsmodul von 1 GPa (1 · 10⁹ N/m²) bis 80 GPa (80 · 10⁹ N/m²) aufweist und kein Elastomer ist, oder dass das Übertragungselement als zweites Element ausgebildet ist und dass das zweite Element ein Federelement und einen Freiraum für einen Federweg des Federelements aufweist, wobei das Federelement zumindest teilweise aus einem zweiten Material von größer als 80 GPa ist, und dass das zweite Element Bestandteil des Werkzeugs ist ist und integral mit einer Führungsschiene des Werkzeugs ausgebildet ist.

Es hat sich gezeigt, dass auch Materialien mit einem höheren Elastizitätsmodul als Silikon zur Dämpfung der vom Werkzeug auf den Stehbolzen übertragenen Kräfte ausreichen oder sogar besser geeignet sind. Dadurch, dass das erste Element zumindest teilweise aus einem ersten Material besteht, das einen Elastizitätsmodul von 1 GPa bis 80 GPa aufweist, verschleißt das erste Element in nur sehr geringem Maß und dämpft gleichzeitig die vom Werkzeug auf den Stehbolzen übertragenen Querkräfte ausreichend ab. Dadurch kann das Arbeitsgerät verschleißarm und sicher betrieben werden. Eine Schädigung der Verbindung zwischen dem Stehbolzen und dem Gehäuseteil durch die Querkräfte ist dadurch effektiv verhindert. Dadurch ist ein sicherer und verschleißarmer Betrieb des Arbeitsgeräts möglich. Kräfte können dadurch auch bei hoher Übertragungsfrequenz mit minimalem Federweg übertragen werden.

Dadurch, dass das zweite Element ein Federelement zumindest teilweise aus einem zweiten Material mit einem Elastizitätsmodul von größer als 80 GPa und einen Freiraum für einen Federweg des Federelements aufweist, kann das zweite Element aus verschleißarmem Material hergestellt sein. Dadurch verschleißt das zweite Element, insbesondere das Federelement in nur sehr geringem Maß und dämpft gleichzeitig die vom Werkzeug auf den Stehbolzen übertragenen Querkräfte ausreichend ab. Dadurch kann das Arbeitsgerät verschleißarm und sicher betrieben werden. Dadurch, dass das zweite Element zumindest teilweise aus einem zweiten Material besteht, das einen Elastizitätsmodul von größer als 80 GPa aufweist, kann das zweite Element besonders verschleißarm und langlebig gestaltet sein.

Die beiden erfindungsgemäßen Varianten haben die technische Wirkung gemein, dass die jeweiligen Übertragungselemente bei geringem Verschleiß eine gute Dämpfungswirkung erzielen. Das gute Verschleißverhalten wird durch Materialien mit einem Elastizitätsmodul von mindestens 1 GPa erreicht. Bis einschließlich 80 GPa ist die Dämpfungswirkung der Materialien selbst ausreichend. Ab mehr als 80 GPa muss das Übertragungselement zusätzlich das Federelement und den Freiraum für den Federweg des Federelements aufweisen, um eine ausreichende Dämpfungswirkung zu erzielen. Das zweite Element ist vorteilhaft so ausgelegt, dass es bei der Übertragung der Querkräfte zumindest teilweise aufgrund seiner Form federnd wirkt. Das zweite Element wird dann auch als Formfeder bezeichnet.

In vorteilhafter Weiterbildung der Erfindung ist vorgesehen, dass das Übertragungselement bezüglich der Axialrichtung vollständig um den Stehbolzen umläuft.

Vorteilhaft ist das Übertragungselement zwischen der Öffnung und dem Stehbolzen angeordnet. Insbesondere ist das Übertragungselement mit Spiel auf dem Stehbolzen angeordnet. Dies erleichtert die Montage und die Demontage des Arbeitsgeräts.

Zweckmäßig ist das Übertragungselement an dem Werkzeug befestigt. Dadurch ist ein Austausch des Werkzeugs möglich, ohne dass die Gefahr besteht, das Übertragungselement zu verlieren.

In vorteilhafter Ausgestaltung der Erfindung ist vorgesehen, dass die Öffnung einen Rand aufweist, und dass das Übertragungselement am Rand der Öffnung des Werkzeugs festgelegt ist. Dadurch ist das Übertragungselement unverlierbar mit dem Werkzeug verbunden. Das Arbeitsgerät besteht aus einer geringeren Anzahl einzelner Bauteile und lässt sich daher auf einfache Weise montieren und demontieren.

In vorteilhafter Variante der Erfindung ist das Übertragungselement an dem Stehbolzen befestigt. Dadurch kann verhindert werden, dass das Übertragungselement bei einem Werkzeugwechsel verloren geht. Insbesondere ist das Übertragungselement verliersicher an dem Stehbolzen befestigt.

In besonderer Ausgestaltung der Erfindung ist das Übertragungselement austauschbar an dem Stehbolzen gehalten. Dadurch ist eine Anpassung der Steifigkeit des Systems aus Gehäuseteil, Stehbolzen, Übertragungselement und Werkzeug auf einfache Weise möglich. So kann beispielsweise bei Verwendung eines anderen Werkzeugs durch Austausch des Übertragungselements gegen ein Übertragungselement mit einem anderen Elastizitätsmodul das Übertragungselement an die geänderte Situation angepasst werden. Sollte das Übertragungselement nach einer langen Einsatzzeit verschlissen sein, ist durch die Austauschbarkeit auf einfache Weise ein Austausch des verschlissenen Übertragungselements gegen ein neues Übertragungselement möglich.

Vorteilhaft ist das Übertragungselement eine Hülse. Zweckmäßig weist die Hülse im Wesentlichen die Form eines Hohlzylinders auf. Eine im Wesentlichen hohlzylindrische Hülse kann auch eine geschlitzte Hülse sein.

Zweckmäßig besteht das erste Element vollständig aus dem ersten Material. Dadurch ist eine einfache Herstellung des ersten Elements möglich. Vorteilhaft ist das erste Material Kunststoff. Erfindungsgemäß ist das erste Material kein Elastomer. Es kann auch vorgesehen sein, dass das erste Material Leichtmetall ist. Insbesondere kann das erste Material Aluminium sein. Das erste Material kann auch eine Aluminiumlegierung sein.

Vorteilhaft besteht das zweite Element vollständig aus dem zweiten Material. Insbesondere ist das Federelement des zweiten Elements zwischen dem Freiraum des zweiten Elements und dem Stehbolzen angeordnet.

Zweckmäßig beträgt eine radial zur Längsachse des Stehbolzens und senkrecht zu einer Längsmittelachse des Werkzeugs gemessene Freiraumbreite des Freiraums des zweiten Elements mindestens 10%, insbesondere mindestens 20% einer radial zur Längsachse des Stehbolzens und senkrecht zu der Längsmittelachse des Werkzeugs gemessenen Federbreite des Federelements. Dadurch kann eine Formfeder gebildet sein. Trotz des großen Elastizitätsmoduls des Federelements von größer als 80 GPa kann das zweite Element dadurch so gestaltet sein, dass die Dämpfungswirkung des zweiten Elements ausreichend ist.

Insbesondere ist das Gehäuseteil zumindest teilweise aus Leichtmetall, insbesondere aus Aluminium. Dadurch ist das Arbeitsgerät leicht und handlich. Es kann auch vorgesehen sein, dass das Gehäuseteil aus einer Aluminium- oder einer Magnesiumlegierung besteht.

Insbesondere ist das Werkzeug bezüglich der Längsachse des Stehbolzens frei von einer Rotationssymmetrie. Das Werkzeug weist bezüglich der Längsachse des Stehbolzens vorteilhaft keine Rotationssymmetrie auf. Insbesondere ist zumindest ein Teil des Werkzeugs im Betrieb des Arbeitsgeräts relativ zu dem Gehäuseteil unbeweglich.

Ausführungsbeispiele der Erfindung werden im Folgenden anhand der Zeichnung erläutert. Es zeigen:
- Fig. 1: eine schematische perspektivische Darstellung eines Arbeitsgeräts mit einem Stehbolzen und einer Führungsschiene,
- Fig. 2: eine Explosionsdarstellung von Teilen des Arbeitsgeräts aus Fig. 1,
- Fig. 3: eine Explosionsdarstellung von Teilen eines Arbeitsgeräts,
- Fig. 4: einen Schnitt durch das Arbeitsgerät aus Fig. 3, wobei die Schnittebene eine Längsachse eines Stehbolzens und eine Mittellängsachse einer Führungsschiene beinhaltet,
- Fig. 5: eine Explosionsdarstellung von Teilen einer alternativen Ausführung eines Arbeitsgeräts,
- Fig. 6: einen Schnitt durch das Arbeitsgerät aus Fig. 5, wobei die Schnittebene eine Längsachse eines Stehbolzens und eine Mittellängsachse einer Führungsschiene beinhaltet,
- Fig. 7 bis 9: Seitenansichten auf Führungsschienen und Stehbolzen mit verschiedenen Ausführungen für ein Übertragungselement.

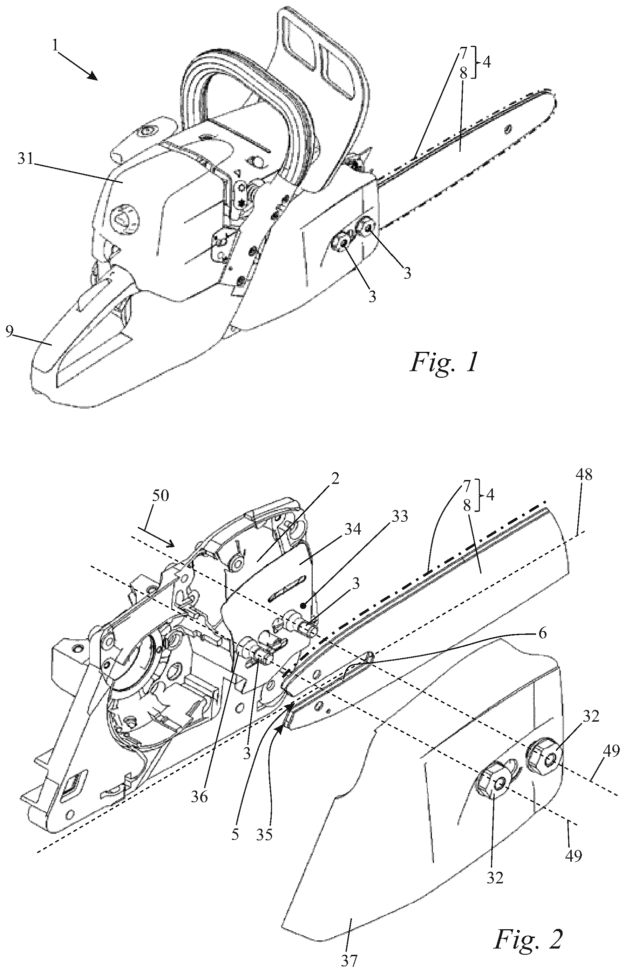

Fig. 1 zeigt ein handgeführtes Arbeitsgerät 1. Bei dem handgeführten Arbeitsgerät 1 handelt es sich um eine Motorkettensäge. Das Arbeitsgerät 1 weist einen Handgriff 9 und eine Führungsschiene 8 auf, an der eine Sägekette 7 umlaufend geführt ist. Der Handgriff 9 ist an einer Rückseite eines Gehäuses 31 der Motorkettensäge angeordnet. Die Führungsschiene 8 ragt an einer Vorderseite des Gehäuses 31 der Motorkettensäge vom Gehäuse 31 weg. Die Führungsschiene 8 und die Sägekette 7 bilden gemeinsam ein Werkzeug 4 des Arbeitsgeräts 1. Das Werkzeug 4 besitzt eine in Fig. 2 dargestellte Öffnung 5. Die Öffnung 5 ist in der Führungsschiene 8 ausgebildet. Durch die Öffnung 5 ragt mindestens ein Stehbolzen 3. Ein an dem Stehbolzen 3 geschraubtes Befestigungselement 32 spannt die Führungsschiene 8 gegen das Gehäuse 31. Das Befestigungselement 32 ist im Ausführungsbeispiel eine Mutter.

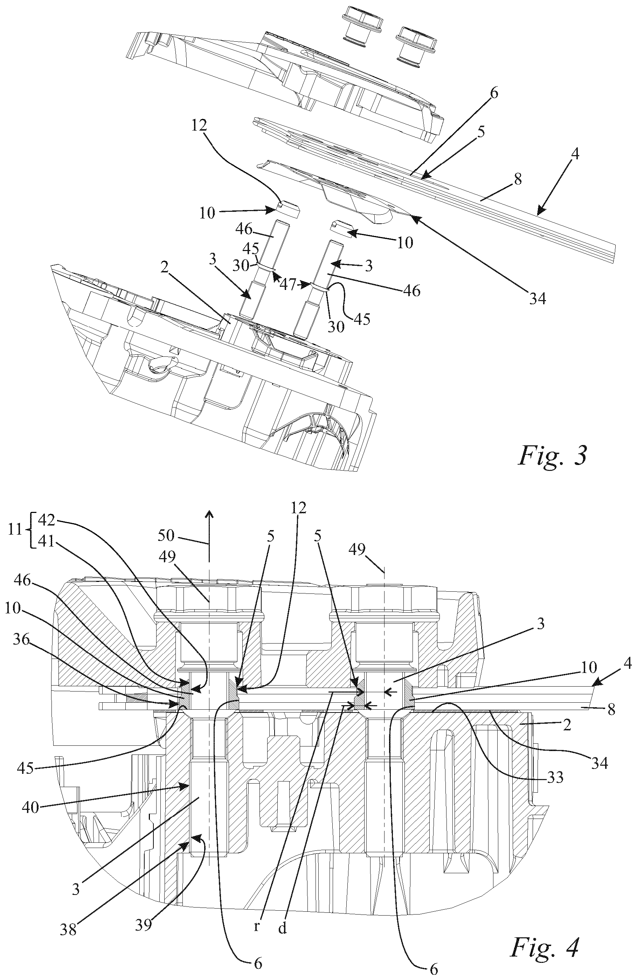

Wie in Fig. 2 dargestellt, besitzt das Arbeitsgerät 1 ein Gehäuseteil 2, das einen Teil des Gehäuses 31 bildet. Am Gehäuseteil 2 ist ein nicht dargestellter Motor zum Antrieb der Sägekette 7 festgelegt. Im Ausführungsbeispiel ist das Gehäuseteil 2 ein Teil eines Motorgehäuses, an dem der Motor angeordnet ist. Der Motor ist vorteilhaft ein Verbrennungsmotor, und das Gehäuseteil 2 bildet einen Teil eines Kurbelgehäuses des Verbrennungsmotors. Aus dem Gehäuseteil 2 steht der mindestens eine Stehbolzen 3 hervor. Im Ausführungsbeispiel sind zwei Stehbolzen 3 vorgesehen. Der Stehbolzen 3 erstreckt sich entlang einer Längsachse 49. Die Längsachse 49 verläuft in Axialrichtung 50. Die Axialrichtung 50 erstreckt sich von dem Gehäuseteil 2 in Richtung der Führungsschiene 8. Ein Stehbolzen 3 ist senkrecht zu einer in Fig. 4 dargestellten Auflagefläche 33 des Gehäuseteils 2 orientiert. Auf der Auflagefläche 33 liegt die Führungsschiene 8 mittelbar oder unmittelbar auf. Üblicherweise ist ein Seitenblech 34 auf die Auflagefläche 33 aufgelegt. Das Seitenblech 34 ist dann zwischen der Führungsschiene 8 und der Auflagefläche 33 angeordnet. Die Führungsschiene 8 ist dann auf das Seitenblech 34 aufgelegt. Das Seitenblech 34 weist eine Öffnung auf, mit der es auf den Stehbolzen 3 gesteckt ist.

Der Stehbolzen 3 besteht aus Stahl. Im Ausführungsbeispiel besteht der Stehbolzen 3 aus gehärtetem Stahl. Das Gehäuseteil 2 besteht vorteilhaft zumindest teilweise aus Leichtmetall, insbesondere aus einer Magnesiumlegierung. Es kann auch vorgesehen sein, dass das Gehäuseteil aus mehreren verschiedenen Werkstoffen besteht. Insbesondere kann das Gehäuseteil 2 einen Teil eines Kurbelgehäuses eines Verbrennungsmotors des Arbeitsgeräts 1 bilden.

Der Stehbolzen 3 ist auswechselbar. Hierzu kann der Stehbolzen 3, insbesondere von der Auflagefläche 33 aus, aus dem Gehäuseteil 2 herausgeschraubt werden.

Die Führungsschiene 8 weist ein hinteres Ende 35 auf. Das hintere Ende 35 weist die Öffnung 5 auf. Das hintere Ende 35 ist dem Handgriff 9 zugewandt. Das Werkzeug 4 erstreckt sich längs einer Längsmittelachse 48. Die Längsmittelachse 48 ist die Längsmittelachse der Führungsschiene 8. Die Längsmittelachse 48 verläuft senkrecht zur Längsachse 49 des Stehbolzens 3. Die Führungsschiene 8 erstreckt sich in einer Lotebene zur Längsachse 49. In der schematischen Darstellung nach Fig. 2 ist die Öffnung 5 in der Führungsschiene 8 zum hinteren Ende 35 der Führungsschiene 8 hin offen. Es kann aber auch vorgesehen sein, dass die Öffnung 5 zum hinteren Ende 35 der Führungsschiene 8 hin geschlossen ist. Dies ist in den Ausführungsbeispielen nach den Figuren 3 bis 9 der Fall, in denen die Öffnung 5 als Langloch ausgebildet ist. Wie in Fig. 2 dargestellt, durchdringt die Öffnung 5 die Führungsschiene 8 in Axialrichtung 50 vollständig. Die Öffnung 5 der Führungsschiene 8 ist vorteilhaft symmetrisch bezüglich einer von der Längsmittelachse 48 und der Längsachse 49 aufgespannten Ebene angeordnet. Die Öffnung 5 erstreckt sich entlang der Längsmittelachse 48.

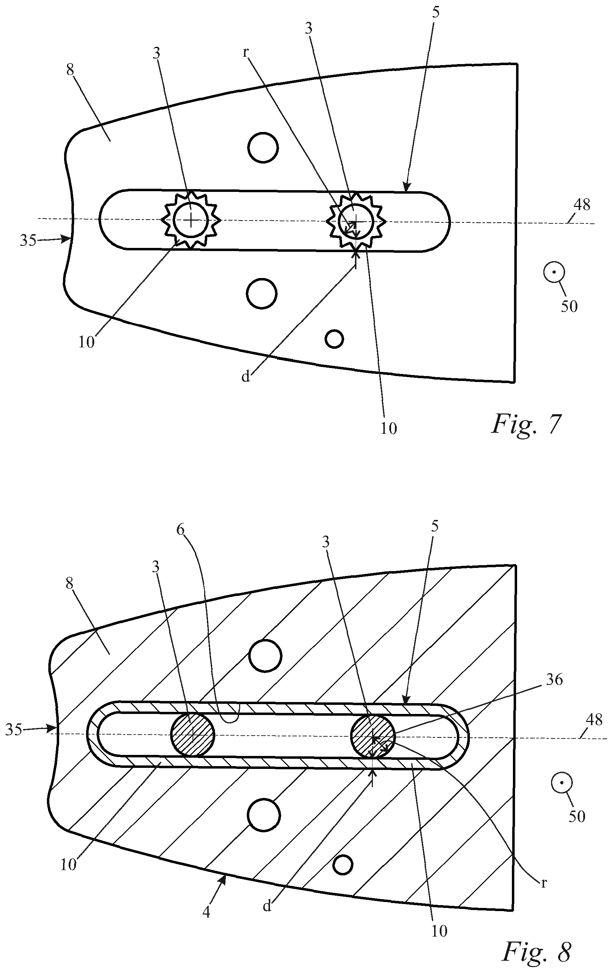

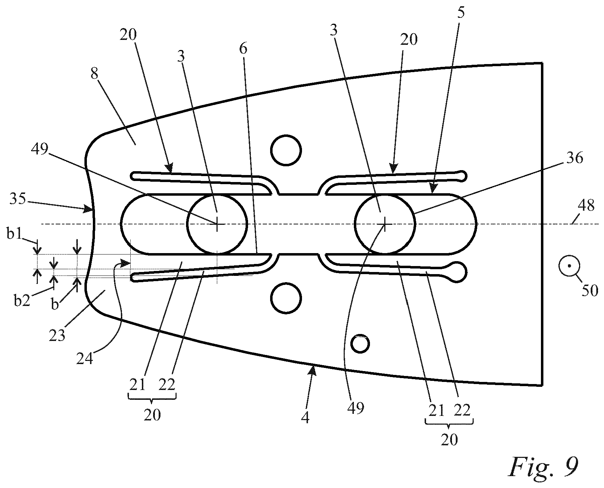

Zur Befestigung der Führungsschiene 8 am Gehäuseteil 2 wird die Führungsschiene 8 mit ihrer Öffnung 5 über die beiden Stehbolzen 3 gesteckt. In den Ausführungsbeispielen sind die beiden Stehbolzen 3 hintereinander auf der Längsmittelachse 48 angeordnet. Die beiden Stehbolzen 3 können für sich genommen gleich ausgebildet sein. Dies gilt für sämtliche Ausführungsbeispiele. Es kann aber auch vorgesehen sein, dass die Stehbolzen 3 unterschiedlich ausgebildet sind. An den Stehbolzen 3 ist ein Bund für die Auflage der Führungsschiene 8 angeordnet. Der Bund 36 kann wie in den Figuren 3 bis 7 dargestellt, durch ein separates Bauteil gebildet sein. Es kann aber auch vorgesehen sein, dass der Bund 36 integraler Bestandteil des Stehbolzens 3 ist, wie in den Ausführungsbeispielen nach den Figuren 8 und 9. An dem Bund 36 liegt die Führungsschiene 8 an dem Umfang der Öffnung 5 an. Bei der Montage ist die Führungsschiene in Richtung ihrer Längsmittelachse 48 bei Anlage an den Stehbolzen relativ zu dem Gehäuseteil 2 verschiebbar. Wenn sich die Führungsschiene 8 in der gewünschten Position befindet, werden die Stehbolzen 3 durch Löcher eines Kettenraddeckels 37 des Arbeitsgeräts 1 geführt. Der Kettenraddeckel 37 deckt die Öffnung 5 der Führungsschiene 8 zumindest teilweise ab. Die Führungsschiene 8 ist zwischen dem Gehäuseteil 2 und dem Kettenraddeckel 37 angeordnet. Durch Verschieben der Führungsschiene 8 relativ zu dem Gehäuseteil 2 kann die Sägekette 7 gespannt werden. Auf die aus dem Kettenraddeckel 37 ragenden Stehbolzen 3 werden als Befestigungsmittel 32 Muttern geschraubt. Die Muttern pressen den Kettenraddeckel 37 und die Führungsschiene 8 gegen das Gehäuseteil 2. Auf diese Weise ist die Führungsschiene 8 am Gehäuseteil 2 befestigt. Im Betrieb des Arbeitsgeräts 1 ist zumindest ein Teil des Werkzeugs 4 relativ zu dem Gehäuseteil 2 unbeweglich. Die Sägekette 7 läuft im Betrieb des Arbeitsgeräts 1 um die Führungsschiene 8 um. Die Sägekette 7 wird von der Führungsschiene 8 geführt. Im Betrieb des Arbeitsgeräts 1 ist die Führungsschiene 8 relativ zu dem Gehäuseteil 2 unbeweglich. Das Werkzeug 4 ist bezüglich der Längsachse 49 des Stehbolzens 3 frei von einer Rotationssymmetrie. Der größte Abstand einer Außenkante des Werkzeugs 4 zu der Längsachse 49 beträgt ein Vielfaches des kleinsten Abstands einer Außenkante des Werkzeugs 4 zur Längsachse 49. Insbesondere beträgt der größte Abstand einer Außenkante des Werkzeugs 4 zu der Längsachse 49 mindestens das Doppelte des kleinsten Abstands einer Außenkante des Werkzeugs 4 zur Längsachse 49.

Im Betrieb des Arbeitsgeräts 1 kann es zu Vibrationen der Führungsschiene 8 kommen. Durch die Vibrationen oder auch beim Sägen mit der Motorkettensäge werden Kräfte von der Führungsschiene 8 auf den Stehbolzen 3 übertragen und vom Stehbolzen 3 in das Gehäuseteil 2 eingeleitet. Um die Belastung des Gehäuseteils 2 möglichst gering zu halten oder sogar vollständig zu verhindern, weist das Arbeitsgerät 1 ein Übertragungselement auf. Das Übertragungselement dient zur Übertragung von quer zur Axialrichtung 50 wirkenden Querkräften vom Werkzeug 4, insbesondere von der Führungsschiene 8 auf den Stehbolzen 3.

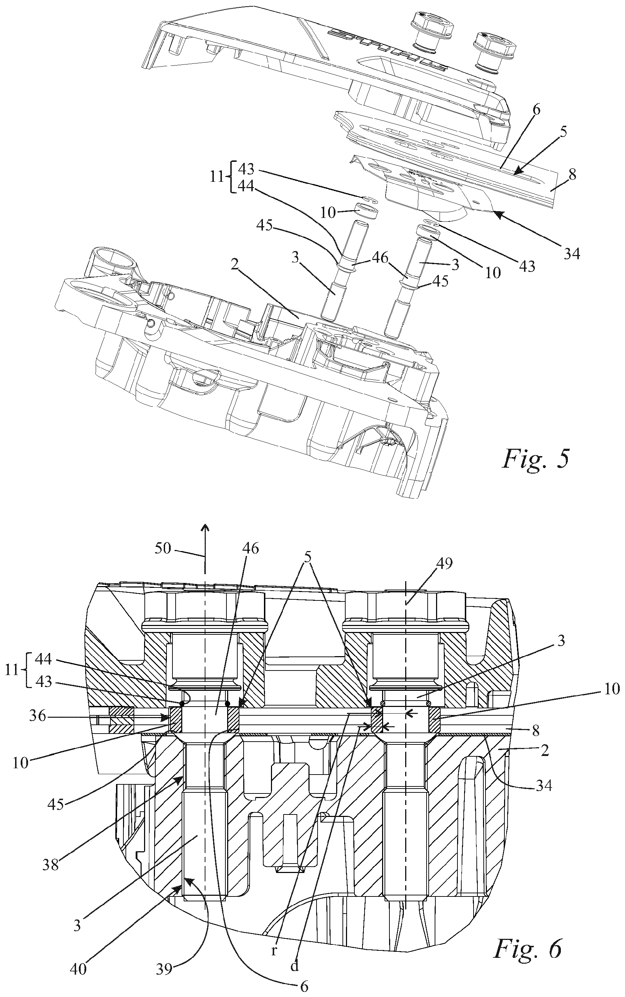

Die Figuren 3 bis 9 zeigen verschiedene Ausführungen für ein Übertragungselement. Gleiche oder ähnliche Teile sind mit identischen Bezugszeichen bezeichnet. Im Ausführungsbeispiel nach den Figuren 3 und 4 ist das Übertragungselement ein erstes Element 10. Das Ausführungsbeispiel nach den Figuren 5 und 6 zeigt das erste Element 10 in einer alternativen Ausgestaltung. Die Figuren 7 und 8 zeigen jeweils ein weiteres Ausführungsbeispiel für ein erstes Element 10. In Fig. 9 ist das Übertragungselement als zweites Element 20 ausgestaltet.

Das erste Element 10 besteht zumindest teilweise aus einem ersten Material, das einen Elastizitätsmodul von 1 GPa bis 80 GPa aufweist. Das zweite Element 20 weist ein Federelement 21 und einen Freiraum 22 auf (Fig. 9). Das Federelement 21 besteht zumindest teilweise aus einem zweiten Material mit einem Elastizitätsmodul von größer als 80 GPa. Der Freiraum 22 dient als Federweg für das Federelement 21. Das zweite Element 20 ist so ausgelegt, dass es bei der Übertragung der Querkräfte zumindest teilweise aufgrund seiner Form federnd wirkt. Das zweite Element 20 ist eine Formfeder. Das zweite Element 20 ist, wie in Fig. 9 dargestellt, integral mit der Führungsschiene 8 ausgebildet.

Die Führungsschiene 8 bildet in ihrem Anlagepunkt am Stehbolzen 3 in diesem Fall eine Formfeder zur Übertragung der Querkräfte von der Führungsschiene 8 auf den Stehbolzen 3. Es kann aber auch vorgesehen sein, dass das zweite Element 20 als separates Bauteil zwischen der Führungsschiene 8 und dem Stehbolzen 3 angeordnet ist. Die federnde Wirkung des zweiten Elements 20 kann dann beispielsweise dadurch realisiert sein, dass das zweite Element 20 zumindest teilweise aus einem nicht dargestellten Drahtgestrick besteht. Das Drahtgestrick kann beispielsweise aus Stahl bestehen. Insbesondere kann das Drahtgestrick im Wesentlichen die Form eines Hohlzylinders aufweisen. Zwischen den Drähten des Drahtgestricks sind Freiräume ausgebildet. Ein Abschnitt eines Drahts bildet das Federelement.

Es kann auch vorgesehen sein, dass das Übertragungselement ein Federelement und einen Freiraum für den Federweg des Federelements aufweist und dass das Federelement zumindest teilweise aus dem ersten Material mit einem Elastizitätsmodul von 1 GPa bis 80 GPa, insbesondere von 60 GPa bis 80 GPa besteht. Es kann vorgesehen sein, dass das Übertragungselement sowohl teilweise aus dem ersten Material mit einem Elastizitätsmodul von 1 GPa bis 80 GPa, insbesondere von 60 GPa bis 80 GPa besteht als auch bei der Übertragung der Querkräfte zumindest teilweise aufgrund seiner Form federnd wirkt.

Das in den Figuren 3 bis 8 dargestellte erste Element 10 ist zwischen dem Stehbolzen 3 und dem Werkzeug 4 angeordnet. Das erste Element 10 ist zwischen der Führungsschiene 8 und dem Stehbolzen 3 angeordnet. Wie in den Figuren 4 und 6 dargestellt, weist das Gehäuseteil 2 eine Aufnahme 38 auf. Die Aufnahme 38 dient zur Aufnahme des Stehbolzens 3. Die Aufnahme 38 weist ein Innengewinde 39 auf. Der Stehbolzen 3 weist an seinem dem Gehäuseteil 2 zugewandten Längsende ein Außengewinde 40 auf. Der Stehbolzen 3 ist in die Aufnahme 38 geschraubt. Das Außengewinde 40 erstreckt sich lediglich über einen Teil der Längserstreckung der Aufnahme 38 in Axialrichtung 50. Der Stehbolzen 3 ragt aus der Aufnahme 38 in Axialrichtung 50 hervor.

Die Öffnung 5 besitzt einen Rand 6. In den Ausführungsbeispielen nach den Figuren 3 bis 8 läuft der Rand 6 geschlossen um die Axialrichtung 50 um. Das erste Element 10 ist zwischen dem Rand 6 der Öffnung 5 und dem Stehbolzen 3 angeordnet. Das erste Element 10 liegt an dem Stehbolzen 3 an. Das erste Element 10 verläuft rings um den Stehbolzen 3. Das Übertragungselement läuft bezüglich der Axialrichtung 50 vollständig um den Stehbolzen 3 um. Das Übertragungselement umschließt die Längsachse 49 des Stehbolzens 3. Dies gilt sowohl für das erste Element 10 als auch für das zweite Element 20 in Form eines Drahtgestricks. Das Übertragungselement ist zwischen der Öffnung 5 und dem Stehbolzen 3 angeordnet. Dies gilt ebenfalls sowohl für das erste Element 10 nach den Figuren 3 bis 8 als auch für das zweite Element 20 in Form eines Drahtgestricks. Es kann vorgesehen sein, dass das Übertragungselement mit Spiel auf dem Stehbolzen 3 angeordnet ist. Dies erleichtert die Montage und die Demontage.

In den Ausführungsbeispielen nach den Figuren 3 bis 7 ist das Übertragungselement eine Hülse. Auch das zweite Element 20 aus Drahtgestrick kann als Hülse bezeichnet werden. Die Hülse weist im Wesentlichen die Form eines Hohlzylinders auf. Es kann auch vorgesehen sein, dass die Hülse geschlitzt ist. Auch eine geschlitzte Hülse weist im Wesentlichen die Form eines Hohlzylinders auf. Für die beiden benachbarten Stehbolzen 3 kann auch ein gemeinsames Übertragungselement vorgesehen sein. Das gemeinsame Übertragungselement weist dann zwei miteinander verbundene Hülsen auf. Die beiden Hülsen können über einen Steg miteinander verbunden sein. In Ansicht in Axialrichtung 50 ist dieses gemeinsame Übertragungselement brillenförmig.

Der Stehbolzen 3 weist in allen Ausführungsbeispielen einen Elementanschlag 45 auf. Der Elementanschlag 45 dient als Anschlag für das Übertragungselement in Richtung entgegen der Axialrichtung 50. Das Übertragungselement liegt an dem Elementanschlag 45 an. In den Ausführungsbeispielen nach den Figuren 3 bis 7 sichert der Elementanschlag 45 das erste Element 10 gegen eine Bewegung entgegen der Axialrichtung 50 in Richtung auf das Gehäuseteil 2 zu. Dies gilt auch für das zweite Element 20, das als Drahtgestrick ausgebildet ist.

Der Elementanschlag 45 läuft bezüglich der Axialrichtung 50 vorteilhaft vollständig um den Stehbolzen 3 um. Der Elementanschlag 45 ist von einem Vorsprung 47 des Stehbolzens 3 gebildet. Der Vorsprung 47 steht über einen Bolzengrundkörper 46 in Radialrichtung bezüglich der Längsachse 49 des Stehbolzens 3 vor. Der Elementanschlag 45 steht über den Bolzengrundkörper 46 in Radialrichtung bezüglich der Längsachse 49 des Stehbolzens 3 vor. Der Vorsprung 47 bildet auf seiner dem Gehäuseteil 2 zugewandten Seite einen Bolzenanschlag 30 für den Stehbolzen 3 am Gehäuseteil 2. Dadurch ist die Einschraubtiefe des Stehbolzens 3 in das Gehäuseteil 2 begrenzt. Der Vorsprung 47 dient zur Anlage an dem Gehäuseteil 2. Über den Vorsprung 47 können im Betrieb des Arbeitsgeräts 1 Querkräfte vom Stehbolzen 3 auf das Gehäuseteil 2 übertragen werden.

Das erste Element 10 nach den Ausführungsbeispielen nach den Figuren 3 bis 7 ist durch eine Sicherungsvorrichtung 11 an dem Stehbolzen 3 gesichert. In den Ausführungsbeispielen nach den Figuren 3, 4 und 7 umfasst die Sicherungsvorrichtung 11 eine Gewindeverbindung zwischen dem ersten Element 10 und dem Stehbolzen 3. Das erste Element 10 wird auf den Stehbolzen 3 aufgeschraubt. Hierzu weist der Stehbolzen 3 an seinem aus dem Gehäuseteil 2 hervorragenden Längsende ein Sicherungsaußengewinde 41 auf (Fig. 4). Das erste Element weist ein Sicherungsinnengewinde 42 auf. Das Sicherungsinnengewinde 42 korrespondiert mit dem Sicherungsaußengewinde 41. Das Sicherungsaußengewinde 41 und das Sicherungsinnengewinde 42 bilden gemeinsam die Sicherungsvorrichtung 11 zur Sicherung des ersten Elements 10 auf dem Stehbolzen 3. Durch die Sicherungsvorrichtung 11 ist das erste Element im Betrieb gegen eine Bewegung in Axialrichtung 50 auf dem Stehbolzen 3 gesichert. Es kann hierbei vorgesehen sein, dass das Sicherungsaußengewinde 41 einen in Axialrichtung 50 gemessenen Abstand zum Elementanschlag 45 aufweist. Der Abstand ist größer ist als eine in Axialrichtung 50 gemessene Höhe des ersten Elements 10. Dadurch, dass sich das Sicherungsaußengewinde 41 nur über einen Teil des freien Endes des Stehbolzen 3 erstreckt, kann das erste Element 10 aufgeschraubt werden bis das Sicherungsaußengewinde 41 und das Sicherungsinnengewinde 42 außer Eingriff gelangen. Durch den beschriebenen Abstand befindet sich das erste Element 10 dann unmittelbar an dem Elementanschlag 45. Eine Bewegung entgegen der Axialrichtung 50 ist nur möglich, wenn das erste Element 10 wieder manuell mit seinem Sicherungsinnengewinde 42 in das Sicherungsaußengewinde 41 des Stehbolzens 3 eingeführt wird. Zusätzlich müssen das erste Element 10 und der Stehbolzen 3 in umgekehrter Drehrichtung gegeneinander verdreht werden.

Das erste Element 10 weist einen Zweiflach 12 auf. An dem Zweiflach 12 kann ein Gabelschlüssel angreifen und das erste Element 10 auf diese Weise auf den Stehbolzen 3 geschraubt oder von dem Stehbolzen 3 abgeschraubt werden.

Im Ausführungsbeispiel nach den Figuren 5 und 6 ist die Sicherungsvorrichtung 11 durch einen Sicherungsring 43 und eine Nut 44 im Stehbolzen 3 gebildet. Die Nut 44 läuft um den Stehbolzen 3 bezüglich der Axialrichtung 50 um. Die Nut 44 ist eine Vertiefung in der Außenfläche des Stehbolzens 3. Die Nut 44 ist eine Vertiefung in dem Bolzengrundkörper 46 des Stehbolzens 3. Die Nut 44 ist bezüglich der Axialrichtung 50 auf der dem Gehäuseteil 2 abgewandten Seite des Übertragungselements angeordnet. Das erste Element 10 ist zwischen der Nut 44 und dem Gehäuseteil 2 angeordnet. Der Sicherungsring 43 greift in die Nut 44 ein. Der Sicherungsring 43 steht in Richtung quer zur Axialrichtung 50 aus der Nut 44 hervor. Der Sicherungsring 43 begrenzt eine Bewegung des Übertragungselements, insbesondere des ersten Elements 10 in Axialrichtung 50. Dadurch ist das Übertragungselement, insbesondere das erste Element 10 gegen eine Bewegung in Axialrichtung 50 relativ zu dem Stehbolzen 3 in Richtung weg von dem Gehäuseteil 2 gesichert. Es kann auch vorgesehen sein, das zweite Element 20 in Form eines Drahtgestricks durch eine Sicherungsvorrichtung 11 mit einem Sicherungsring 43 und einer Nut 44 zu sichern.

Im Ausführungsbeispiel nach den Fig. 5 und 6 kann anstatt des Sicherungsrings 43 ein Rastelement vorgesehen sein. Das Rastelement ist integraler Bestandteil des ersten Elements 10. Das Rastelement bildet zusammen mit der Nut 44 die Sicherungsvorrichtung 11. Bei der Montage des ersten Elements 10 schnappt das Rastelement in die Nut 44 und sichert so das erste Element 10 dauerhaft gegen eine Bewegung in Axialrichtung 50 relativ zu dem Stehbolzen 3.

In den Ausführungsbeispielen nach den Figuren 3 bis 7 ist durch das Zusammenspiel zwischen dem Anschlag 45 und der Sicherungsvorrichtung 11 die Position des ersten Elements 10 bezüglich der Axialrichtung 50 relativ zu dem Stehbolzen 3 auf einen bestimmten Bereich bezüglich der Längsachse 49 des Stehbolzens 3 beschränkt. Die Position des ersten Elements 10 ist so bestimmt, dass sich das erste Element 10 mindestens über die gesamte in Axialrichtung 50 gemessene Breite der Führungsschiene 8 erstreckt. Es kann auch vorgesehen sein, die Position des zweiten Elements 20 in Form eines Drahtgestricks in analoger Weise zu beschränken und zu bestimmen.

Das Übertragungselement ist austauschbar an dem Stehbolzen 3 gehalten. Dies gilt sowohl für das erste Element 10 gemäß den Ausführungsbeispielen nach den Figuren 3 bis 7 als auch für das zweite Element 20, das als Drahtgestrick ausgebildet ist.

Das erste Element 10 liegt in den Ausführungsbeispielen nach den Figuren 3 bis 7 mit seiner Innenseite zumindest teilweise an dem Stehbolzen 3 an. Vorteilhaft besteht zwischen dem ersten Element 10 und dem Stehbolzen 3 ein geringes Spiel. Das erste Element 10 liegt in Richtung quer zur Axialrichtung 50, insbesondere senkrecht zur Axialrichtung 50 an dem Stehbolzen 3 an. Das erste Element 10 liegt in Richtung quer zur Axialrichtung 50, insbesondere in Richtung senkrecht zur Axialrichtung 50 am Rand 6 der Öffnung 5 an. Vom Rand 6 der Öffnung 5 können über das erste Element 10 Querkräfte von dem Werkzeug 4, insbesondere von der Führungsschiene 8 auf das erste Element 10 übertragen werden. Von dem ersten Element 10 können Querkräfte auf den Stehbolzen 3 übertragen werden. Der Stehbolzen 3 weist einen Elastizitätsmodul von 190 GPa bis 230 GPa, insbesondere von 210 GPa auf. Das erste Element 10 besteht zumindest teilweise aus dem ersten Material, das einen Elastizitätsmodul von 1 GPa bis 80 GPa aufweist. In den Ausführungsbeispielen nach den Figuren 3 bis 8 besteht das erste Element 10 vollständig aus dem ersten Material. Durch die unterschiedlichen Elastizitätsmodule des ersten Elements 10 und des Stehbolzens 3 ergibt sich eine große Differenz zwischen den Steifigkeiten des ersten Elements 10 und des Stehbolzens 3. Hinsichtlich der Steifigkeiten liegt in Richtung radial zur Längsachse 49 des Stehbolzens 3 beim Übergang von dem Übertragungselement auf den Stehbolzen 3 ein Steifigkeitssprung vor. Dadurch ändert sich die Steifigkeit der Baugruppe bestehend aus dem Stehbolzen 3 und dem ersten Element 10 im Vergleich zu der Steifigkeit des Stehbolzens alleine. Dasselbe gilt für das zweite Element 20 in Form eines Drahtgestricks. Kräfte, insbesondere Querkräfte werden von der Führungsschiene 8 auf den Stehbolzen 3 durch das erste Element 10 gedämpft übertragen. Dadurch sind die Kräfte auf die Verbindung zwischen Stehbolzen 3 und Gehäuseteil 2 geringer. Der Verschleiß dieser Verbindung, insbesondere des Innengewindes 39 der Aufnahme 38 für den Stehbolzen 3 ist minimiert.

In den Ausführungsbeispielen nach den Figuren 3 bis 8 weist das erste Material des ersten Elements 10 einen Elastizitätsmodul von 1 GPa bis 80 GPa auf. Das erste Material des ersten Elements 10 kann in diesen Ausführungsbeispielen Kunststoff oder Metall, insbesondere Leichtmetall sein. Das Leichtmetall enthält bevorzugt Aluminium. Vorteilhaft enthält das Leichtmetall eine Aluminiumlegierung.

Wenn das erste Material des ersten Elements 10 Kunststoff ist, weist es vorteilhaft einen Elastizitätsmodul von 1 GPa bis 10 GPa auf. Das erste Material des ersten Elements 10 ist kein Elastomer. Der Kunststoff, aus dem das erste Material des ersten Elements 10 besteht, ist vorteilhaft Polyetheretherketon (PEEK). Es kann auch vorgesehen sein, dass das erste Element 10 aus dem Ausführungsbeispiel nach den Fig. 3 bis 8 einen Elastizitätsmodul von 1 GPa bis 10 GPa aufweist und/oder aus Kunststoff, insbesondere aus PEEK ist.

Wenn das erste Material des ersten Elements 10 Metall ist, weist das erste Material des ersten Elements 10 einen Elastizitätsmodul von 10 GPa bis 80 GPa, insbesondere von 50 GPa bis 80 GPa auf. Das erste Material des ersten Elements 10 kann insbesondere Leichtmetall sein. Vorteilhaft enthält das Metall Aluminium. Bevorzugt enthält das Metall eine Aluminiumlegierung. Das erste Element 10 kann vollständig aus dem ersten Material bestehen. Es kann auch vorgesehen sein, dass das erste Element 10 aus dem Ausführungsbeispiel nach den Fig. 3 bis 8 einen Elastizitätsmodul von 10 GPa bis 80 GPa, insbesondere von 50 GPa bis 80 GPa aufweist und/oder aus Leichtmetall, insbesondere aus einer Aluminiumlegierung ist.

Die Ausführungsbeispiele zeigen ein Arbeitsgerät 1 umfassend das Werkzeug 4, das Gehäuseteil 2 und den in das Gehäuseteil 2 eingeschraubten Stehbolzen 3 zur Befestigung des Werkzeugs 4 an dem Gehäuseteil 2, wobei der Stehbolzen 3 aus dem Gehäuseteil 2 längs der Axialrichtung 50 hervorragt, wobei das Werkzeug 4 die Öffnung 5 aufweist, wobei der Stehbolzen 3 zumindest teilweise in die Öffnung 5 ragt, wobei das Arbeitsgerät 1 zur Übertragung von quer zur Axialrichtung 50 wirkenden Querkräften vom Werkzeug 4 auf den Stehbolzen 3 das Übertragungselement aufweist, wobei das Übertragungselement aus einer Gruppe mit einem als erstes Element 10 ausgebildeten Übertragungselement und einem als zweites Element 20 ausgebildeten Übertragungselement ausgewählt ist, wobei das erste Element 10 zumindest teilweise aus einem ersten Material besteht, das einen Elastizitätsmodul von 1 GPa bis 80 GPa aufweist und wobei das zweite Element 20 ein Federelement 21 zumindest teilweise aus einem zweiten Material mit einem Elastizitätsmodul von größer als 80 GPa und einen Freiraum 22 für einen Federweg des Federelements 21 aufweist.

In den Ausführungsbeispielen nach den Figuren 3 bis 9 weist der Stehbolzen 3 im Bereich des Übertragungselements einen Bolzenradius r auf. Der Bolzenradius r beträgt in den Ausführungsbeispielen nach den Figuren 3 bis 9 mehr als 2,5 mm, insbesondere mehr als 2,8 mm, bevorzugt mehr als 3,1 mm. Der Bolzenradius r beträgt weniger als 4 mm, insbesondere weniger als 3,7 mm, bevorzugt weniger als 3,3 mm. Das erste Element 10 weist eine radial zur Längsachse 49 des Stehbolzens 3 gemessene maximale Dicke d auf. Es kann auch vorgesehen sein, dass die maximale Dicke d radial zur Längsachse 49 des Stehbolzens 3 und senkrecht zur Längsmittelachse 48 gemessen ist. Dies ist bei den Ausführungsbeispielen nach den Figuren 7 und 8 der Fall. Die maximale Dicke d beträgt mindestens 30%, insbesondere mindestens 40%, bevorzugt mindestens 50% des Bolzenradius r des Stehbolzens 3. Die maximale Dicke d beträgt in den Ausführungsbeispielen nach den Figuren 3 bis 8 mindestens 1 mm, bevorzugt mindestens 1,5 mm. Die maximale Dicke d beträgt höchstens 100%, insbesondere höchstens 80%, bevorzugt höchstens 60% des Bolzenradius r. Die maximale Dicke d beträgt in den Ausführungsbeispielen nach den Figuren 3 bis 7 höchstens 3 mm, insbesondere höchstens 2,5 mm, bevorzugt höchstens 2 mm. Die genannten Werte gelten auch für das zweite Element 20 in Form eines Drahtgestricks.

Im Ausführungsbeispiel nach Fig. 7 ist das erste Element 10 als Hülse ausgebildet. Das erste Element 10 besitzt in Draufsicht entgegen der Axialrichtung 50 eine sternförmige Außenkontur. Das erste Element 10 in Ausführung nach Fig. 7 ist auf den Stehbolzen 3 aufgeschraubt. Die Gewindeverbindung zwischen dem Stehbolzen 3 und dem ersten Element 10 bildet die Sicherungsvorrichtung 11. Das erste Element 10 in Ausführung nach Fig. 8 kann aber auch durch jede andere der zu den Ausführungsbeispielen nach den Figuren 3 bis 6 beschriebenen Sicherungsvorrichtungen 11 gegen eine Bewegung in Axialrichtung 50 gesichert sein.

Im Ausführungsbeispiel nach Fig. 8 ist das als erstes Element 10 ausgebildete Übertragungselement am Werkzeug 4 festgelegt. Das erste Element 10 und das Werkzeug 4 sind getrennte Bauteile. Das erste Element 10 ist am Rand 6 der Öffnung 5 des Werkzeugs 4 festgelegt. Das erste Element 10 ist gegenüber dem Werkzeug 4 zumindest in Richtung der Längsmittelachse 48 unverschiebbar. Das erste Element 10 ist vorteilhaft am Rand 6 der Öffnung 5 angespritzt. Das erste Element 10 ist dadurch in Axialrichtung 50 fixiert. Das erste Element 10 kann auch als Einsatzteil ausgebildet sein, das in die Öffnung 5 eingepresst und damit auch in Axialrichtung 50 fixiert ist. Das erste Element 10 erstreckt sich im Ausführungsbeispiel nach Fig. 8 über die gesamte in Axialrichtung 50 gemessene Breite der Führungsschiene 8. Das erste Element 10 bedeckt den Rand 6 der Öffnung 5 vollständig. Das erste Element 10 läuft im Ausführungsbeispiel nach Fig. 8 bezüglich der Axialrichtung 50 vollständig um die Längsachse 49 des Stehbolzens 3 um.

In Fig. 9 ist das Übertragungselement als zweites Element 20 ausgebildet. Das zweite Element 20 ist Bestandteil des Werkzeugs 4. Das zweite Element 20 ist Bestandteil der Führungsschiene 8. In die Führungsschiene 8 ist ausgehend vom Rand 6 der Öffnung 5 ein Schlitz in der Führungsschiene 8 vorgesehen. Durch den Schlitz ist ein Freiraum 22 ausgebildet. Zwischen dem Freiraum 22 und der Öffnung 5 der Führungsschiene 8 ist ein Federelement 21 ausgebildet. Das Federelement 21 liegt an dem Stehbolzen 3 an. Im Ausführungsbeispiel nach Fig. 9 ist das zweite Element 20 durch das Federelement 21 und den Freiraum 22 gebildet.

Der Freiraum 22 stellt einen Federweg für das Federelement 21 zur Verfügung. Das zweite Element 20 ist so ausgelegt, dass es bei der Übertragung der Querkräfte aufgrund seiner Form federnd wirkt.

Die Längsmittelachse 48 des Werkzeugs 4 und die Längsachse 49 des Stehbolzens 3 spannen eine Mittelebene auf. Eine senkrecht zu dieser Mittelebene gemessene Maximalbreite b des Federelements 21 ist so gewählt, dass das Federelement 21 federnd wirkt.

Im Ausführungsbeispiel nach Fig. 9 ermöglicht der Freiraum 22, dass sich das Federelement 21 in Richtung quer zur Axialrichtung 50 bewegen kann. Dadurch werden Kräfte, insbesondere Querkräfte von der Führungsschiene 8 auf den Stehbolzen 3 federnd übertragen. Das zweite Element 20 ist eine Formfeder.

Die Maximalbreite b des Federelements 21 ist entlang einer gedachten Linie auf der Führungsschiene 8 gemessen. Diese gedachte Linie mit der Maximalbreite b des Federelements 21 markiert eine Trennstelle zwischen dem zweiten Element 20 und einem Grundkörper 23 der Führungsschiene 8. Eine Ebene senkrecht zur Längsmittelachse 48 trennt das Federelement 21 von dem Grundkörper 23.

Das zweite Element 20 ist zwischen dem Grundkörper 23 und dem Stehbolzen 3 angeordnet. In den Ausführungsbeispielen nach den Figuren 3 bis 8 ist der Grundkörper der Führungsschienen durch die gesamte Führungsschiene 8 gebildet. Dadurch ist auch bei den Ausführungsbeispielen nach den Figuren 3 bis 8 das erste Element 10 zwischen dem Grundkörper der Führungsschiene 8 und dem Stehbolzen 3 angeordnet. Bei allen Ausführungsbeispielen ist das Übertragungselement zwischen dem Grundkörper der Führungsschiene 8 und dem Stehbolzen 3 angeordnet. Dies gilt bezüglich der Richtung quer, insbesondere senkrecht, insbesondere radial zur Axialrichtung 50.

Das Federelement 21 des zweiten Elements 20 ist zwischen dem Freiraum 22 des zweiten Elements 20 und dem Stehbolzen 3 angeordnet. Das Federelement 21 ist eine Zunge. Die Zunge erstreckt sich ausgehend von dem Grundkörper 23 der Führungsschiene 8. Die Zunge erstreckt sich im Wesentlichen längs der Richtung der Längsmittelachse 48 der Führungsschiene 8. Das Federelement 21 weist ein Längsende 24 auf. Am Längsende 24 besitzt das Federelement 21 die Maximalbreite b. Das Federelement 21 ist mit seinem Längsende 24 an dem Grundkörper 23 der Führungsschiene 8 festgelegt. Das Federelement 21 ist integraler Bestandteil der Führungsschiene 8. Das Federelement 21 ist materialeinheitlich mit dem Grundkörper 23 ausgebildet.

Das Federelement 21 des zweiten Elements 20 besitzt eine Federbreite b1. Die Federbreite b1 ist radial zu der Längsachse 49 des Stehbolzens 3 und senkrecht zu der Längsmittelachse 48 des Werkzeugs 4 gemessen. Die Federbreite b1 ist senkrecht zu der Mittelebene auf Höhe der Längsachse 49 des Stehbolzens 3 gemessen.

Der Freiraum 22 ist zwischen dem Grundkörper 23 und dem Federelement 21 angeordnet. Der Freiraum 22 ist bezüglich der Radialrichtung der Längsachse 49 zwischen dem Grundkörper 23 und dem Federelement 21 angeordnet. Der Freiraum 22 des zweiten Elements 20 besitzt eine Freiraumbreite b2. Die Freiraumbreite b2 ist radial zu der Längsachse 49 des Stehbolzens 3 und senkrecht zu der Längsmittelachse 48 des Werkzeugs 4 gemessen. Die Freiraumbreite b2 ist senkrecht zu der Mittelebene auf Höhe der Längsachse 49 des Stehbolzens 3 gemessen. Die Freiraumbreite b2 ist zwischen dem Federelement 21 und dem Grundkörper 23 gemessen. Die Freiraumbreite b2 ist bei Anlage des Federelements 21 an dem Stehbolzen 3 gemessen. Die Freiraumbreite b2 beträgt mindestens 10%, insbesondere mindestens 20% der Federbreite b1. Im Ausführungsbeispiel nach Fig. 9 beträgt die Freiraumbreite b2 mindestens 30% der Federbreite b1.

Die Freiraumbreite b2 beträgt mindestens 10%, insbesondere mindestens 20% der Maximalbreite b. Im Ausführungsbeispiel nach Fig. 9 beträgt die Freiraumbreite b2 mindestens 0,1 mm, insbesondere mindestens 0,5 mm. Die Freiraumbreite b2 beträgt höchstens 70%, insbesondere höchstens 50%, bevorzugt höchstens 40% der Maximalbreite b. Die Freiraumbreite b2 beträgt höchstens 2 mm, insbesondere höchstens 1,5 mm.

Das zweite Element 20 besteht zumindest teilweise aus einem zweiten Material, das einen Elastizitätsmodul von größer als 80 GPa aufweist. Das Federelement 21 besteht zumindest teilweise aus einem zweiten Material, das einen Elastizitätsmodul von größer als 80 GPa aufweist. Es kann auch vorgesehen sein, dass das zweite Element 20, insbesondere das Federelement 21 zumindest teilweise aus einem Material besteht, das einen Elastizitätsmodul von größer als 60 GPa aufweist. Im Ausführungsbeispiel nach Fig. 9 weist das Federelement 21 einen Elastizitätsmodul von 200 GPa bis 330 GPa, insbesondere von 280 GPa bis 330 GPa, bevorzugt von 290 GPa bis 320 GPa auf. Im Ausführungsbeispiel nach Fig. 9 ist das zweite Material Stahl. Das Federelement 21 besteht vollständig aus dem zweiten Material. Der Grundkörper 23 der Führungsschiene 8 besteht aus dem zweiten Material. Die Führungsschiene 8 weist einen Elastizitätsmodul von größer als 80 GPa auf. Die Führungsschiene 8 weist in den Ausführungsbeispielen einen Elastizitätsmodul von 200 GPa bis 330 GPa, insbesondere von 280 GPa bis 330 GPa auf. Die Führungsschiene 8 besteht aus Stahl.

In den Ausführungsbeispielen nach den Figuren 8 und 9 ist das Übertragungselement an dem Werkzeug 4 befestigt. Das Übertragungselement ist verliersicher an dem Werkzeug 4 gehalten. Das Übertragungselement ist unlösbar mit dem Werkzeug 4 verbunden. Im Ausführungsbeispiel nach Fig. 9 ist das Übertragungselement an dem Werkzeug 4 ausgebildet.

Es kann auch vorgesehen sein, das zweite Element 20 als Drahtgestrick, das im Wesentlichen die Form eines Hohlzylinders aufweist, auszubilden. Das Drahtgestrick kann austauschbar über den Stehbolzen 3 gestülpt sein. Das Drahtgestrick ist zwischen der Führungsschiene 8 und dem Stehbolzen 3 angeordnet. Das Drahtgestrick besteht aus einem zweiten Material, das einen Elastizitätsmodul von größer als 80 GPa insbesondere von 200 GPa bis 330 GPa, bevorzugt von 280 GPa bis 330 GPa aufweist. Das Drahtgestrick kann aus Stahl bestehen. Ein Abschnitt eines Drahts bildet ein Federelement. Durch den Abstand zwischen zwei benachbarten Drähten des Drahtgestricks ist ein Freiraum ausgebildet. Der Freiraum ist bezüglich der Radialrichtung der Längsachse 49 des Stehbolzens 3 zwischen dem Federelement und der Führungsschiene 8 angeordnet.

## Patentansprüche

1. Arbeitsgerät umfassend ein Werkzeug (4), ein Gehäuseteil (2) und einen in das Gehäuseteil (2) eingeschraubten Stehbolzen (3) zur Befestigung des Werkzeugs (4) an dem Gehäuseteil (2), wobei der Stehbolzen (3) aus dem Gehäuseteil (2) längs einer Axialrichtung (50) hervorragt, wobei das Werkzeug (4) eine Öffnung (5) aufweist, wobei der Stehbolzen (3) zumindest teilweise in die Öffnung (5) ragt, wobei das Arbeitsgerät (1) zur Übertragung von quer zur Axialrichtung (50) wirkenden Querkräften vom Werkzeug (4) auf den Stehbolzen (3) ein Übertragungselement aufweist,
**dadurch gekennzeichnet,**
- **dass** das Übertragungselement als erstes Element (10) ausgebildet ist, und dass das erste Element (10) zumindest teilweise aus einem ersten Material besteht, das einen Elastizitätsmodul von 1 GPa bis 80 GPa aufweist und kein Elastomer ist
oder
- **dass** das Übertragungselement als zweites Element (20) ausgebildet ist, und dass das zweite Element (20) ein Federelement (21) zumindest teilweise aus einem zweiten Material mit einem Elastizitätsmodul von größer als 80 GPa und einen Freiraum (22) für einen Federweg des Federelements (21) aufweist, und dass das zweite Element (20) Bestandteil des Werkzeugs (4) ist und integral mit einer Führungsschiene (8) des Werkzeugs (4) ausgebildet ist.

2. Arbeitsgerät nach Anspruch 1,
**dadurch gekennzeichnet, dass** das Übertragungselement bezüglich der Axialrichtung (50) vollständig um den Stehbolzen (3) umläuft.

3. Arbeitsgerät nach Anspruch 1,
**dadurch gekennzeichnet, dass** das Übertragungselement zwischen der Öffnung (5) und dem Stehbolzen (3) angeordnet ist.

4. Arbeitsgerät nach Anspruch 1,
**dadurch gekennzeichnet, dass** das Übertragungselement an dem Werkzeug (4) befestigt ist.

5. Arbeitsgerät nach Anspruch 1,
**dadurch gekennzeichnet, dass** die Öffnung (5) einen Rand (6) aufweist und dass das Übertragungselement am Rand (6) der Öffnung (5) des Werkzeugs (4) festgelegt ist.

6. Arbeitsgerät nach Anspruch 1,
**dadurch gekennzeichnet, dass** das Übertragungselement an dem Stehbolzen (3) befestigt ist, insbesondere verliersicher an dem Stehbolzen (3) gehalten ist.

7. Arbeitsgerät nach Anspruch 1,
**dadurch gekennzeichnet, dass** das Übertragungselement austauschbar an dem Stehbolzen (3) gehalten ist.

8. Arbeitsgerät nach Anspruch 1,
**dadurch gekennzeichnet, dass** das Übertragungselement eine Hülse ist.

9. Arbeitsgerät nach Anspruch 8,
**dadurch gekennzeichnet, dass** die Hülse im Wesentlichen die Form eines Hohlzylinders aufweist.

10. Arbeitsgerät nach Anspruch 1,
**dadurch gekennzeichnet, dass** das erste Element (10) vollständig aus dem ersten Material besteht.

11. Arbeitsgerät nach Anspruch 1,
**dadurch gekennzeichnet, dass** das erste Material Kunststoff ist.

12. Arbeitsgerät nach Anspruch 1,
**dadurch gekennzeichnet, dass** das erste Material Leichtmetall ist.

13. Arbeitsgerät nach Anspruch 1,
**dadurch gekennzeichnet, dass** das Federelement (21) des zweiten Elements (20) vollständig aus dem zweiten Material besteht.

14. Arbeitsgerät nach Anspruch 1,
**dadurch gekennzeichnet, dass** das Federelement (21) des zweiten Elements (20) zwischen dem Freiraum (22) des zweiten Elements (20) und dem Stehbolzen (3) angeordnet ist.

15. Arbeitsgerät nach Anspruch 1,
**dadurch gekennzeichnet, dass** das Gehäuseteil (2) zumindest teilweise aus Leichtmetall, insbesondere aus einer Aluminium- oder Magnesiumlegierung besteht.

16. Arbeitsgerät nach Anspruch 1,
**dadurch gekennzeichnet, dass** das Werkzeug (4) bezüglich der Längsachse (49) des Stehbolzens (3) frei von einer Rotationssymmetrie ist.

## Claims

1. Implement comprising a tool (4), a housing part (2) and a stud bolt (3) which is screwed into the housing part (2) and serves for fastening the tool (4) to the housing part (2), wherein the stud bolt (3) projects from the housing part (2) along an axial direction (50), wherein the tool (4) has an opening (5), wherein the stud bolt (3) projects at least partially into the opening (5), wherein the implement (1) has a transmission element for transmitting from the tool (4) to the stud bolt (3) transverse forces acting transversely to the axial direction (50), **characterized**
- **in that** the transmission element is in the form of a first element (10), and in that the first element (10) consists at least partially of a first material which has a modulus of elasticity of 1 GPa to 80 GPa and which is not an elastomer, or
- **in that** the transmission element is in the form of a second element (20), and in that the second element (20) has a spring element (21), which is composed at least partially of a second material having a modulus of elasticity of greater than 80 GPa, and a clearance (22) for a spring deflection of the spring element (21), and in that the second element (20) is a constituent part of the tool (4) and is formed integrally with a guide bar (8) of the tool (4).

2. Implement according to Claim 1,
**characterized in that** the transmission element runs completely around the stud bolt (3) in an encircling manner with respect to the axial direction (50).

3. Implement according to Claim 1,
**characterized in that** the transmission element is arranged between the opening (5) and the stud bolt (3).

4. Implement according to Claim 1,
**characterized in that** the transmission element is fastened to the tool (4).

5. Implement according to Claim 1,
**characterized in that** the opening (5) has an edge (6), and **in that** the transmission element is fixed to the edge (6) of the opening (5) of the tool (4).

6. Implement according to Claim 1,
**characterized in that** the transmission element is fastened to the stud bolt (3), in particular is held captively on the stud bolt (3).

7. Implement according to Claim 1,
**characterized in that** the transmission element is held exchangeably on the stud bolt (3).

8. Implement according to Claim 1,
**characterized in that** the transmission element is a sleeve.

9. Implement according to Claim 8,
**characterized in that** the sleeve has substantially the shape of a hollow cylinder.

10. Implement according to Claim 1,
**characterized in that** the first element (10) consists entirely of the first material.

11. Implement according to Claim 1,
**characterized in that** the first material is plastic.

12. Implement according to Claim 1,
**characterized in that** the first material is light metal.

13. Implement according to Claim 1,
**characterized in that** the spring element (21) of the second element (20) consists entirely of the second material.

14. Implement according to Claim 1,
**characterized in that** the spring element (21) of the second element (20) is arranged between the clearance (22) of the second element (20) and the stud bolt (3).

15. Implement according to Claim 1,
**characterized in that** the housing part (2) consists at least partially of light metal, in particular of an aluminium alloy or magnesium alloy.

16. Implement according to Claim 1,
**characterized in that** the tool (4) does not have rotational symmetry with respect to the longitudinal axis (49) of the stud bolt (3).

## Revendications

1. Appareil de travail comprenant un outil (4), une partie de boîtier (2) et un goujon fileté (3) vissé dans la partie de boîtier (2) pour fixer l'outil (4) à la partie de boîtier (2), le goujon fileté (3) dépassant de la partie de boîtier (2) le long d'une direction axiale (50), l'outil (4) présentant une ouverture (5), le goujon fileté (3) faisant saillie au moins partiellement dans l'ouverture (5), l'appareil de travail (1) présentant un élément de transmission pour transmettre des forces transversales agissant transversalement à la direction axiale (50) de l'outil (4) au goujon fileté (3),
**caractérisé**
- **en ce que** l'élément de transmission est réalisé sous forme de premier élément (10), et en ce que le premier élément (10) est constitué au moins partiellement d'un premier matériau qui présente un module d'élasticité de 1 GPa à 80 GPa et qui n'est pas un élastomère
ou
- **en ce que** l'élément de transmission est réalisé sous forme de deuxième élément (20), et en ce que le deuxième élément (20) présente un élément élastique (21) constitué au moins partiellement d'un deuxième matériau ayant un module d'élasticité supérieur à 80 GPa et un espace libre (22) pour une course élastique de l'élément élastique (21), et en ce que le deuxième élément (20) est un constituant de l'outil (4) et est réalisé d'un seul tenant avec un rail de guidage (8) de l'outil (4).

2. Appareil de travail selon la revendication 1,
**caractérisé en ce que** l'élément de transmission s'étend complètement autour du goujon fileté (3) par rapport à la direction axiale (50).

3. Appareil de travail selon la revendication 1,
**caractérisé en ce que** l'élément de transmission est agencé entre l'ouverture (5) et le goujon fileté (3).

4. Appareil de travail selon la revendication 1,
**caractérisé en ce que** l'élément de transmission est fixé à l'outil (4).

5. Appareil de travail selon la revendication 1,
**caractérisé en ce que** l'ouverture (5) présente un bord (6) et **en ce que** l'élément de transmission est fixé au bord (6) de l'ouverture (5) de l'outil (4).

6. Appareil de travail selon la revendication 1,
**caractérisé en ce que** l'élément de transmission est fixé au goujon fileté (3), notamment est maintenu de manière imperdable sur le goujon fileté (3).

7. Appareil de travail selon la revendication 1,
**caractérisé en ce que** l'élément de transmission est maintenu de manière interchangeable sur le goujon fileté (3).

8. Appareil de travail selon la revendication 1,
**caractérisé en ce que** l'élément de transmission est un manchon.

9. Appareil de travail selon la revendication 8,
**caractérisé en ce que** le manchon présente essentiellement la forme d'un cylindre creux.

10. Appareil de travail selon la revendication 1,
**caractérisé en ce que** le premier élément (10) est entièrement constitué du premier matériau.

11. Appareil de travail selon la revendication 1,
**caractérisé en ce que** le premier matériau est une matière plastique.

12. Appareil de travail selon la revendication 1,
**caractérisé en ce que** le premier matériau est un métal léger.

13. Appareil de travail selon la revendication 1,
**caractérisé en ce que** l'élément élastique (21) du deuxième élément (20) est entièrement constitué du deuxième matériau.

14. Appareil de travail selon la revendication 1,
**caractérisé en ce que** l'élément élastique (21) du deuxième élément (20) est agencé entre l'espace libre (22) du deuxième élément (20) et le goujon fileté (3).

15. Appareil de travail selon la revendication 1,
**caractérisé en ce que** la partie de boîtier (2) est constituée au moins partiellement d'un métal léger, notamment d'un alliage d'aluminium ou de magnésium.

16. Appareil de travail selon la revendication 1,
**caractérisé en ce que** l'outil (4) est exempt d'une symétrie de rotation par rapport à l'axe longitudinal (49) du goujon fileté (3).
